# EUROPEAN PATENT APPLICATION

(11) **EP 4 716 270 A1**
(43) Date of publication of application: **25.03.2026**
(21) Application number: 25204117.3
(22) Date of filing: 23.09.2025
(51) Int. Cl.: H04W 12/069, H04W 12/40, H04W 40/24, H04W 8/00, H04W 8/18

(54) **METHOD, CONFIGURATION PROGRAM, APPLICATION PROGRAM DATASET, COMPUTER-READABLE DATA CARRIER AS WELL AS SERVER DEVICE FOR CONFIGURING NETWORK SWITCHING OF A USER DEVICE AND SAME**

(30) Priority: 24.09.2024 US 202463698407 P
(71) Applicant: Giesecke+Devrient Mobile Security Germany GmbH, 81677 München (DE)
(72) Inventor: Monter Prat, Jordi, Dulles, 20166 (US); Moron I Peiro, Oriol, Dulles, 20166 (US); Borase, Hemant Udhavrao, Dulles, 20166 (US)
(74) Representative: LKGLOBAL Partnerschaftsgesellschaft mbB

(57) **Abstract**

A method, as well as a corresponding configuration program (10), an application program dataset (A), a computer-readable data carrier (11, 12, 13), a user device (5), and a server device (3) are provided, wherein for configuring the user device (5), the method comprises the steps of providing at least one user profile dataset (P) for a user (U) to operate a secure element (6), such as an eUICC, of the user device (5), to access at least one mobile telecommunication network (M); performing a network scan with the user device (5) to identify available mobile telecommunication networks (N, M); and switching the secure element (6) to access at least one further mobile telecommunication network (N) identified by the network scan.

## Description

### Technical Field

The present disclosure relates to the field of configuring user devices, for example, smart cards, transaction cards, personal mobile devices or Internet-of-Things (IoT) devices, or alike, for participating in multiple communication networks. In particular, the present disclosure relates to a method of configuring a user device, in particular for secure operation involving a trusted entity, a configuration program for configuring a user device, in particular for secure operation involving a trusted entity, a diversification program dataset for a secure element of a user device, such as an eUICC, a computer-readable data carrier, a user device, in particular configured for allowing secure operation involving a trusted entity, and a server device, in particular a security server providing a secure location, in particular configured for allowing secure remote operation of user devices involving a trusted entity.

### Background of the Invention

User devices, such as personal mobile devices or IoT-devices, as well as smart cards (e.g., so-called java cards), identification cards, transaction cards, etc., are known from the prior art. The user devices are commonly configured to employ electronic subscriber profiles authenticating a user for secure transactions or communicating on telecommunication networks, e.g., mobile networks. Therefore, user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic subscriber profiles that may allow the user devices to connect to one or more mobile networks. A subscriber profile (e.g., an eSIM profile) may be generated by a mobile network operator (MNO) and may be stored, e.g., downloaded to a mobile user device. The subscriber profile may then be installed on a secure element of the user device and used for communication over a corresponding mobile network by the user device.

In recent years, governments have lifted restrictions on certain band spectrums, such as CBRS (band 150MHz to 3.5 GHz) in the US, allowing the access from private organizations. Consequently, there has been a notable increase of NPN (Non-Public Networks) deployments leveraging these dedicated bands. NPN deployments function akin to Public Network (PN) based networks, permitting seamless device transitions between NPN and PN. Given overlapping range limits of networks, it is desirable to enable a user device to switch its attachment to different networks.

US 2024/114414 A1 relates to a method and apparatus for providing a network switching service to a user equipment. A method of a network apparatus for enabling a user equipment to switch a communication network between a public network and a private network by communicating with a subscriber apparatus, where the subscriber apparatus stores subscribed Network Slice Selection Assistance Information (NSSAI) of the user equipment and a network selection discriminator (NSD) at a subscriber profile, the network selection discriminator (NSD) indicates a network selected by the user equipment, the method may include receiving a registration request from the user equipment and transmitting a slice selection subscription data request to the subscriber apparatus; receiving the subscribed NSSAI from the subscriber apparatus, wherein as the subscribed NSSSAI, subscribed single (S)-NSSAI with at least one value is received; transmitting a registration response including allowed S-NSSAI based on the received subscribed S-NSSAI; and receiving a session establishment request including the allowed S-NSSAI from the user equipment and creating a session to one of the public network and the private network according to the allowed S-NSSAI included in the session establishment request.

US 10 484 370 B2 refers to a method for operating a security element of a mobile terminal with a memory unit includes using a first subscription profile with a first operating system for the security element, and a second subscription profile with a second operating system for the security element. The method involves operating the security element with the first operating system to communicate with the first subscription profile via a first mobile communication network; switching from the first operating system to the second operating system of the security element through a boot loader in the memory unit loading and executing the second operating system following a reboot of the security element; and operating the security element with the second operating system, to be able to communicate with the second subscription profile via a second mobile communication network. A corresponding security element and a corresponding mobile terminal are provided.

EP 2 835 996 B1 relates to a method of performing a switch from a first mobile network to a second mobile network by a mobile terminal comprising a secure element. The method comprises the steps of: (a) requesting attachment to the first mobile network using a first identification data element, preferably a first IMSI, of a first subscription profile; (b) requesting attachment to the second mobile network using a second identification data element, preferably a second IMSI, of a second subscription profile; and (c) requesting attachment to the first mobile network, the second mobile network or another mobile network using a confirmation data element, preferably a confirmation IMSI, wherein the confirmation data element has the same format as the first and the second identification data element and is configured such that the attachment request is forwarded to a subscription management server in order to inform the subscription management whether the attachment to the second mobile network was successful.

EP 2 835 994 B1 relates to a method of performing a switch from a first mobile network to a second mobile network by a mobile terminal comprising a secure element. The method comprises the steps of: (a) attaching to the first mobile network using a first attachment message containing a first identification data element, preferably a first IMSI, of a first subscription profile; and attaching to the second mobile network by an attachment process including a second attachment message containing a second identification data element, preferably a second IMSI, of a second subscription profile, wherein the second mobile network is configured to monitor at least parts of the attachment process, to determine the second identification data element contained therein and to forward this information to a subscription management server in order to confirm the successful attachment of the secure element to the second mobile network.

US 2015 281957 A1 describes a subscriber identity module for authenticating a subscriber on a communication network, which includes: a first set of subscriber identity data for authenticating the subscriber; a second set of subscriber identity data for authenticating the subscriber, with the first set of subscriber identity data differing from the second set of subscriber identity data; and a means for managing the first and second sets of subscriber identity data, with the managing being realized by management functions. The subscriber identity module can be extended to a method for managing the subscriber identity module, to a use of the subscriber identity module in a mobile end device, and to a system comprising subscriber end devices and a remote entity.

Methods for configuring user devices, as described above, may not fully satisfy all requirements regarding capabilities of user devices to switch between their attachment to different networks. In particular, the involvement of secure elements and respective user profiles in the switching process can be regarded as not being solved in a fully satisfactory manner. On the one hand, convenient operation and availability, as well as on the other hand, functional safety, and security of different network attachments may not be fully assured.

### Summary of the Invention

It may be seen as an object to improve the interaction between the user devices and/or their secure elements when dealing with different networks. In particular, it may thus be seen as an object to provide a way to handle network attachments of user devices involving their secure elements, such that on the one hand, convenient operation and availability, as well as on the other hand, functional safety, and security of different network attachments can be assured or at least improved in a satisfactory manner. These objects are at least partly achieved by the subject-matter of the independent claims.

According to an aspect, a method of configuring a user device, in particular for communication via mobile telecommunication networks, is provided, the method comprising the steps of providing at least one user profile dataset for a user to operate a secure element, such as an eUICC, of the user device, to access at least one mobile telecommunication network; performing a network scan with the user device to identify available mobile telecommunication networks; and switching the secure element to access at least one further mobile telecommunication network identified by the network scan.

According to an aspect, a configuration program for configuring a user device, in particular for communication via mobile telecommunication networks, is provided, wherein the configuration program comprises instructions which, when the configuration program is executed by a server device, a user device, and/or a secure element, cause the server device, the user device, and/or the secure element to carry out a corresponding method.

According to an aspect, an application program dataset for operating a secure element of a user device, such as an eUICC, is provided, wherein the application program dataset is configured to carry out a corresponding method according to at least one of claims and/or configured with a corresponding configuration program.

According to an aspect, a computer-readable data carrier is provided, having stored thereon a corresponding configuration program and/or a corresponding application program dataset.

According to an aspect, a user device, in particular a mobile device or an IoT device to be configured for communication via mobile telecommunication networks by a user, is provided, wherein the user device is configured to carry out a corresponding method, comprises a corresponding configuration program, a corresponding application program dataset and/or a corresponding computer-readable data carrier.

According to an aspect, a server device is provided, such as a security server providing a secure location, in particular for allowing secure remote operation of user devices involving a trusted entity, wherein the server device is configured to carry out a corresponding method, comprises a corresponding configuration program, a corresponding application program dataset and/or a corresponding computer-readable data carrier.

For performing the network scan, the user device may ping network terminals, e.g., respective towers, in range. For example, a network scan is triggered by the secure element running +COPS via "RUN AT COMMAND". The further mobile telecommunication network may be any alternative network that can be provided by a public and/or private entity, such as a university network, a company network, or alike. The secure element may be understood as any kind of tamper resistant element, such as an UICC, eUICC, iUICC, SIM, eSIM, iSIM, or alike.

The application program dataset may at least in part be provided on the secure element and can be configured to interact with the user device and/or at least one network terminal thereof. In other words, the application program dataset may at least partly run on the secure element, for example, as a part of an operating system dataset configured to operate the secure element. Additionally, an installation program dataset can be provided for installing and/or managing the application program dataset, such as for installing and/or updating an operating system dataset or respective update data subsets, including the application program dataset. Both, the installation program dataset and the installation program dataset may be integrated as data subsets into a customization dataset, such as a firmware suite allowing for customization of data on the secure element as described herein.

The application program dataset may be provided as a part of an operating system dataset of the secure element and/or may be configured to interact with the operating system dataset. A complete operating system dataset and/or subsets thereof may comprise the application program dataset. The operating system dataset and/or application program dataset may be configured to read, write, delete, manage and/or administer any kind of data stored on the secure element and such are the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The proposed solution allows for switching between selected mobile communication networks involving the secure element and at least one user profile dataset stored thereon. Given the limited range characteristic of NPN deployments, the solution enables a network detection when a device enters the range of a specific network for initiating network attachment. The proposed solution thus has the advantage over the prior art, that it provides way to handle network attachments of user devices involving their secure elements, such that on the one hand, convenient operation and availability, as well as on the other hand, functional safety, and security of different network attachments can be assured or at least improved in a satisfactory manner.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to an embodiment of the method, the at least one user profile dataset includes security credentials configured for accessing at least one mobile telecommunication network and the at least one further mobile telecommunication network. The security credentials may be administered by the server device and/or trusted entity. The security credentials may be configured such that outside of a manufacturing environment and/or in a post-issuance state they can be accessed via the application program dataset. The security credentials can be provided as a set of security credentials based on respective requirements of the mobile telecommunication networks to be accessed. This further helps in providing way to handle different network attachments of user devices involving their secure elements, such that on the one hand, convenient operation and availability, as well as on the other hand, functional safety, and security of can be assured or at least improved in a satisfactory manner.

According to an embodiment of the method, at least one user profile dataset is provided for accessing the at least one mobile telecommunication network and at least one further user profile dataset is provided for accessing the at least one further mobile telecommunication network. The at least one user profile dataset and the at least one further user profile dataset may include respective security credentials. The security credentials may again be based on respective requirements of the mobile telecommunication networks to be accessed. This can further help in providing way to handle different network attachments of user devices involving their secure elements, such that on the one hand, convenient operation and availability, as well as on the other hand, functional safety, and security of can be assured or at least improved in a satisfactory manner.

According to an embodiment of the method, the at least one user profile dataset comprises respective diversified data configured for accessing the at least one mobile telecommunication network and the at least one further moment to the mobile communication network. The diversified data may comprise at least one profile identifier, at least one subscription identifier, and/or at least one security key for accessing each of the telecommunication networks.

Furthermore, the diversified data may comprise the security credentials and/or may underlie the security credentials. This can further help in providing way to handle different network attachments of user devices involving their secure elements, such that on the one hand, convenient operation and availability, as well as on the other hand, functional safety, and security of can be assured or at least improved in a satisfactory manner.

According to an embodiment of the method, the method further comprises the step of triggering the user device with the secure element to perform the network scan. Thereby, the application program dataset running on the secure element may control the switching process. This can additionally help in providing way to handle different network attachments of user devices involving their secure elements, such that on the one hand, convenient operation and availability, as well as on the other hand, functional safety, and security of can be assured or at least improved in a satisfactory manner.

According to an embodiment of the method, the method further comprises the step of providing a list of available mobile telecommunication networks to the secure element by the user device. For example, the user device can reply to the secure element by informing the secure element about available networks. Thereby, the decision process for switching between networks or at least parts thereof may be performed in the secure element, for example, by the application program dataset. This can further help in providing way to handle different network attachments of user devices involving their secure elements, such that on the one hand, convenient operation and availability, as well as on the other hand, functional safety, and security of can be assured or at least improved in a satisfactory manner.

According to an embodiment of the method, the method further comprises the step of automatically deciding to switch to the at least one further mobile telecommunication network. Consequently, the user device may automatically access the further mobile communication network one respective requirements are met. This can further help in providing way to handle different network attachments of user devices involving their secure elements, such that on the one hand, convenient operation and availability, as well as on the other hand, functional safety, and security of can be assured or at least improved in a satisfactory manner.

According to an embodiment of the method, the method further comprises the step of implementing a time interval until deciding to switch to the at least one further mobile communication network. During such a time interval, for example, the result of a subsequent network scan may be awaited to see if the respective further mobile to the communication network is still available. Thereby, premature, unnecessary, and/or inappropriate switching operations may be prevented. This can additionally help in providing way to handle different network attachments of user devices involving their secure elements, such that on the one hand, convenient operation and availability, as well as on the other hand, functional safety, and security can be assured or at least improved in a satisfactory manner.

According to an embodiment of the method, the method further comprises the step of triggering an assessment of available mobile telecommunication networks based on cell identifiers of network terminals. For example, the cell identifiers of the network terminals currently providing in the at least one mobile to the communication network may be used to assess the current location of the mobile device. Alternatively, or additionally any geo-referencing data, such as GPS data, may be used for assessing a current location of the mobile device. Thereby, geofenc-ing mechanisms may be implemented for at least partly influencing the decision to switch between different networks. This can further help in providing way to handle different network attachments of user devices involving their secure elements, such that on the one hand, convenient operation and availability, as well as on the other hand, functional safety, and security of can be assured or at least improved in a satisfactory manner.

According to an embodiment of the method, the method further comprises the step of assessing a signal strength of the at least one mobile telecommunication network and/or the at least one further mobile telecommunication network. For example, the signal strength may be periodically assessed. For assessing the signal strength, in particular in the further mobile telecommunication network, a +CSQ command may be used. The user device may be attached to the further mobile telecommunication network as long as it is provided to the user device with sufficient signal strength. This can additionally help in providing way to handle different network attachments of user devices involving their secure elements, such that on the one hand, convenient operation and availability, as well as on the other hand, functional safety, and security of can be assured or at least improved in a satisfactory manner.

### Brief Description of the Drawings

- Fig. 1: is a schematic exemplary illustration of a communication system configured for carrying out a method according to the present invention.
- Fig. 2: is a schematic exemplary illustration of several mobile communication networks having overlapping network signals and a user device configured to access the mobile telecommunication networks.
- Fig. 3: is a further schematic exemplary illustration of several mobile communication networks having overlapping network signals and a user device configured to access the mobile telecommunication networks can involve the detection of respective cell IDs.
- Fig. 4: is a schematic exemplary illustration of a filesystem that can be used for managing data objects involved in carrying out a corresponding method.
- Fig. 5: is a schematic exemplary illustration of certain data objects, such as profile identifiers involved in carrying out a corresponding method.
- Fig. 6: is a schematic exemplary illustration of steps that can be involved in transitioning from a user profile to a further user profile when carrying out a corresponding method.
- Fig. 7: is a schematic exemplary illustration of steps that can be involved in transitioning from a further user profile to a user profile when carrying out a corresponding method.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

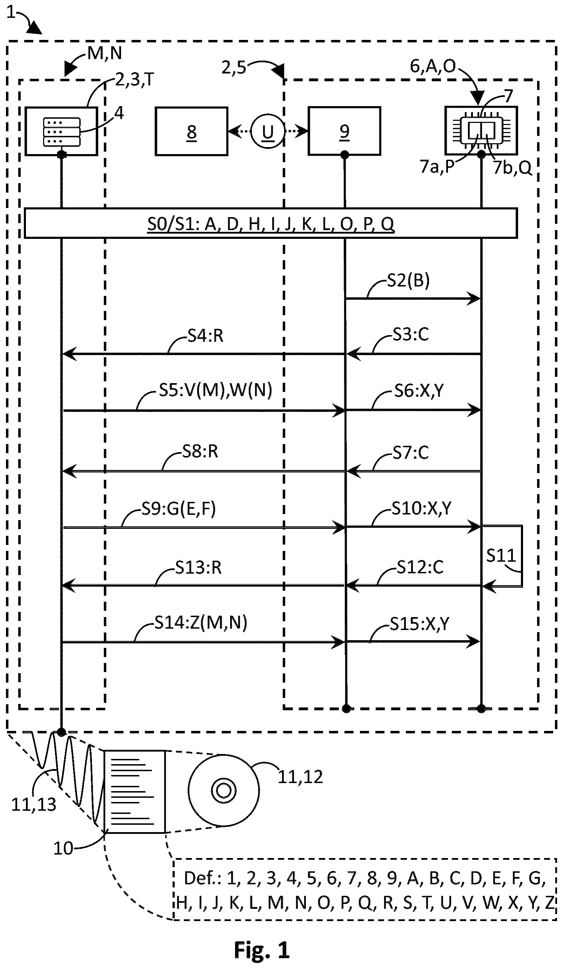

Fig. 1 shows an schematic illustration of an example of a communication system 1 comprising a computing device 2, for instance, in the form of a server device 3 controlled by a trusted entity T, which can include a hardware security module 4 adapted to store, manage and/or provide application program dataset A, operating system datasets O and/or user profiles P, Q for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smartwatch, etc., to be associated with a personal entity. For example, the server device 3 may be provided in the form of a Server for Subscription Manager Data Preparation + (SM-DP+).

In the present example, the user devices 5 may be adapted for secure operation, transactions and/or communication, e.g., via a mobile telecommunication networks M, N by means of at least one user profile dataset P, Q to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location may provide different memory regions, such as at least one first memory region 7a and at least one second memory region 7b.

The at least one user profile dataset P, Q are associated to a respective user U and are configured according to respective diversified data L and/or to access at least one data object D. The at least one user profile P, Q, diversified data L, and/or data object D can have a predefined data format as required for accessing the mobile telecommunication networks M, N, and can be stored in respective memory regions 7a, 7b of the secure storage location 7. By accessing the telecommunication networks M, N, the user may be provided with respective network services and access to data objects D. For example, a mobile telecommunication network M may be a public network (PN). Further mobile telecommunication network may be a non-public network (NPN), such as a private network of a certain government, non-government institution, e.g., schools, colleges, government agencies, departments, and universities, or alike, and since our private companies, service providers, etc.

A management application 8 may be provided which can be configured to allow the user U to communicate with the user device 5, in particular the secure element 6, for example, directly and/or through a communication interface 9 to the user device 5. The management application 8 can be provided in the form of a remote manager, such as an eSIM IoT remote manager (eIM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer data packages, such as eUICC Packages, for instance to carry out Profile State Management and eIM configuration tasks by means of the eIM. For example, the communication interface 9 may be provided as a part of a local management application, such as a IoT Profile Assistant (IPA), which may take the form of an IoT Profile Assistant (IPAd) provided to the user device 5, and/or an IoT Profile Assistant provided (IPAe) arranged in the secure element 6. Alternatively, or additionally, the management application 8 and/or communication interface 9 may be provided as a local profile assistant (LPA) provided to the user device 5 and/or arranged in the secure element 6.

Furthermore, the operating system dataset O may comprise and/or may be configured to interact with an application program dataset A, the at least one user profile P, Q and/or security credentials H, including profile identifiers I, authentication certificates J and/or security keys K. The security credentials H may comprise any kind of credentials defined by e.g., the GSMA, or alike. The security keys K may comprise any kind of cryptographic code or key element which may be adapted to interact with the user devices 5, the secure elements 6, and/or the server device 3 of the trusted entity T as an issuer of any part of the application program dataset A, the security credentials H, the diversified data L, the at least one user profile P, Q, the operating system dataset O, the profile identifiers I, and/or the authentication certificates J and/or any component thereof. The authentication certificates J may be any kind of electronic certificate, for example, that can be issued by the trusted entity T, for authenticating an origin of the user devices 5, the secure elements 6, the secure storage location 7, the application program dataset A, the security credentials H, the diversified data L, the operating system dataset O, the at least one user profile P, Q, the profile identifiers I, and/or any component thereof.

In any of the embodiments of the communication system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the security system 1 and any components thereof communicate as specified in the configuration program 10. Parameters associated with and/or underlying the security system 1, any of the components thereof and/or any steps S carried out thereby, can be defined in and/or by the configuration program 10.

For carrying out the steps S, the configuration program 10 may provide and/or define respective command messages C, which can be configured to interact with the user devices 5, the secure elements 6, the secure storage location 7, the application program dataset A, the security credentials H, the diversified data L, the operating system dataset O, the at least one user profile P, Q, the profile identifiers I, the mobile telecommunication networks M, N and/or any component thereof. Transmission lines (not shown) may be provided for handling and/or transferring any of the above data components and/or data objects D, for example, via the mobile telecommunication networks M, N is parts thereof or elements connected thereto. Therefore, the mobile telecommunication networks M, N may comprise any kind of wired and/or wireless transmission and/or broadcasting chains or lines, including the Internet (for transmissions "Over-The-Air") as well as other physical and/or non-physical data carriers, which can be configured and secured as desired and required by the communication system 1 and its components.

In a first step S1, the server device 3 may provide any of the data components of the configuration system 1, including the operating system dataset O, possibly along with the application program dataset A, respective diversified data L and/or at least one user profile P, Q associated with the user U, to the secure element 6 of the user device 5, for example through the communication interface 9 to be stored in the secure storage location 7 for deployment to the user U. The at least one user profile P, Q may be created based upon the diversified data L. In particular, certain security credentials H may have a high or even the highest security level conceivable for the secure element 6. Any of these components may be provided as a enable access to data objects D, such as electronic load files (ELF), data blobs, or alike.

In the present example, the data provision and step 1 can be associated with a pre-issuance condition W of the user device 5 and/or the secure element 6. Any of the steps taking place after the activation process in step 2 can be associated with a post-issuance condition of the user device 5 and/or the secure element 6. Providing the installation program dataset I to the user device 5 and/or the secure element 6 can therefore be regarded as a zeroth step S0 which may take place in a factory and/or manufacturing facility before the first step S1 of providing data to the user device 5 and/or the secure element 6.

In a second step S2, a terminal profile B of the communication interface 9, for example, of a network terminal (not shown) of the user device 5 connected thereto, of the user device 5 may be provided to the secure element 6 (e.g., TP Byte 8, bit 6 ='1'). The third step S3, a command message C, such as an AT command (e.g., AT+COPS=?) may be sent from the secure element 6 to the communication interface 9. In the fourth step S4, based on the command message C, a network scanning request R may be sent from the communication interface 9 of the user device 5 to the mobile telecommunication networks M, N (e.g. COPS=?), for example, to acquire information regarding available Public Land Mobile Networks (PLMN). In the fifths step S5, for example, a network response V and/or further network response W sent by the mobile telecommunication network M as of the further moment telecommunication network and, respectively, may be received by the communication interface 9. In a sixth step S6, the communication interface 9 may provide a respective terminal response X and/or further terminal response Y to the secure element 6 (e.g. AT+COPS...).

In a seventh step S7, the secure element 6 may sent another command message C to the communication interface 9, for assessing a signal strength G of a network signal E and/or a further network signal F of the mobile telecommunication network M and/or the furthermore mobile telecommunication network N (e.g., AT+CSQ). In an eighth step S8, another network request R for assessing network signal strengths G may be sent from the communication interface 9 to the mobile telecommunication network M and/or the furthermore mobile telecommunication network N (e.g., CSQ). In a ninth step, S9 the signal strength G of the network signal E belonging to the mobile telecommunication network M and/or of the further network signal F belonging to the further mobile telecommunication network M, respectively may be received by the communication interface 9. In a tenth step S10, a corresponding terminal response X and/or further terminal response Y regarding the values of respective signal strengths G acquired can be provided from the communication interface in mind to the secure element 6 (e.g., AT+CSQ).

In an eleventh step S11, it can be decided by the secure element 6, to switch between the mobile telecommunication networks M, N according to the availability of their network signal E as well as further network signal F, respectively, and/or respective signal strengths G. In a twelfth step S12, for example, an additional command message C may be sent from the secure element 6 to the communication interface 9 in order to register the user device 5 at the respective mobile telecommunication network M, N which has been selected to switch to (e.g., AT+COPS <oper>). In a thirteenth step S13, a respective additional network request R for registering at the respective mobile telecommunication network M, N can be sent from the communication interface to the respective network provider, such as an MNO (not shown) which way provide provision of respective security credentials H based on the at least one user profile P, Q intended for the network access. In a fourteenth step S14, for example, upon successful registration, a registration confirmation Z can be provided by the network provider of the mobile telecommunication network M and/or the furthermore mobile telecommunication network N to the communication interface 9. In a fifteenth step S15, respective additional terminal response X, Y regarding successful registration at the mobile telecommunication network M and/or the furthermore mobile telecommunication network N can be provided to the secure element 6 by the communication interface 9 (e.g., AT+COPS<oper>).

According to the present example, RUN AT proactive commands can be used by the secure element 6, such as anUICC/eUICC/iUICC/SIM/eSIM, for example, implemented in the application program dataset A in the form of a JavaCard applet. According to ETSI 102.223 specifications, Card Application Toolkit (CAT) defines a set of commands and procedures to be used by applications, such as the application program dataset A, running on secure elements 6 to enhance the features of such applications to interact with devices and the networks. The standard introduces commands like Provide Local Information (ETSI 102.223, Chapter 6.4.15), enabling queries on network status regarding current enabled networks. However, according to the prior art, there is no mechanism for an application on a secure element 6 available to ascertain all available networks, networks within modem range, or their signal strengths.

For example, the application program dataset A the form of an applet can send RUN AT command to the user device 5, for example, a mobile equipment (ME), to retrieve information related to the network status or even the radio signal strength. RUN AT command proactive command is defined at ETSI 102.223, allows to send AT Command(s) as defined in ETSI 127.007 by an application in the secure element 6 to the user device 5. AT Response(s) can be sent by the device via TERMINAL RESPONSE command mechanism as defined at ETSI 102.223 after completion of the AT command. The user device 5 can then inform the secure element 6 of the supported functions via the TERMINAL PROFILE (ETSI 102.223) byte 8 bit 6. If this bit is set to '1', Proactive UICC: RUN AT command is supported by the user device 5 and accessible to the application program dataset A running on the secure element 6. As per ETSI 102.223, RUN AT proactive command is available if the device is a class "b". AT commands as listed in below table can be used to monitor the network status and trigger a profile switching if the appropriate network is available. These commands are defined in ETSI 127.007 as described below.
PLMN selection +COPS: This command retrieves a list of operators present in the network and allows to attempt to register to a specific MNO, table below provides the definition of the command as per ETSI 127.007:

| **Command** | **Possible response(s)** |
|---|---|
| +COPS=[<mode>[,<format>[,<oper>[,<AcT>]]]] | +CME ERROR: <err> |
| +COPS? | +COPS: <mode>[,<format>,<oper>[,<AcT>]] +CME ERROR: <err> |
| +COPS=? | +COPS: [list of supported (<stat> long alphanumeric <oper>,short alphanumeric <oper>,numeric <oper>[,<AcT>])s][,,(list of supported <mode>s),(list of supported <format>s)] |
| | +CME ERROR: <err> |

+COPS=? Retrieve PLMN list of operators present in the network.
+COPS=<mode>,<format>, <oper>, <AcT> Attempts to register to operator PLMN provided in <oper>. This command can be used by an applet to attach to a specific network when it is available.

Signal quality +CSQ: Retrieves the received signal strength indication (RSSI) and channel bit error rate (BER) from the network:

| **Command** | **Possible response(s)** |
|---|---|
| +CSQ | +CSQ: <rssi>,<ber> |
| | +CME ERROR: <err> |
| +CSQ=? | +CSQ: (list of supported <rssi>s),(list of supported <ber>s) |

+CSQ Retrieves the received signal strength indicator <rssi> and the channel bit error rate (in percent)<ber>. This command can be used by an application program dataset a to retrieve the network signal quality G.

Using command messages C, for example in the form of the commands defined above an applet can query and determine if a specific network is available and based in the results take the decision to perform a profile switching and force the Method for a Java Card applet to steer profile switching based on network strength or network availability. Network attachment to the newly switched profile can be achieved by the following different mechanisms that may be used for a profile switching, for example:
a) Multi IMSI option: where file system(s) of a specific MNO profile are shadowed and Multi IMSI applet copies these file values from the shadowed files to perform a profile switching.
b) eSIM solution: in any of eSIM variants (SGP.02, SGP.22, SGP.32), a secure element 6, such as an UICC/eUICC/iUICC/SIM/eSIM with specific an proprietary API that allows an application program dataset A, for example, the form of an applet installed in the root to perform local switching when the right conditions are available.

Furthermore, backup mechanisms may be defined for user devices 6 not supporting RUN AT proactive command or in case of failure due to any other reason. A possible solution may entail leveraging the Geographical Location Application Programming Interface (API) as defined by 3GPP 31.130 standard. The Geographical Location API may be used to retrieve precise geographical coordinates of a user device 5. These coordinates may serve as the cornerstone for determining proximity to cell identifiers affiliated with a NPN deployment. By maintaining a repository of the geographic coordinates corresponding to these private network cell identifiers, the application program dataset A may undertake an analysis to ascertain the device's positioning relative to the ambit of network routers of the mobile telecommunication networks M, N. Alternatively, or additionally, the Geographical coordinates can be sent to the server device 3, for example, a backend server, to analyze and discerning whether the provided coordinates fall within the purview of a certain network router or antenna. This approach confers enhanced scalability, removing the dependency for an extensive reconfiguration in the application program dataset A itself.

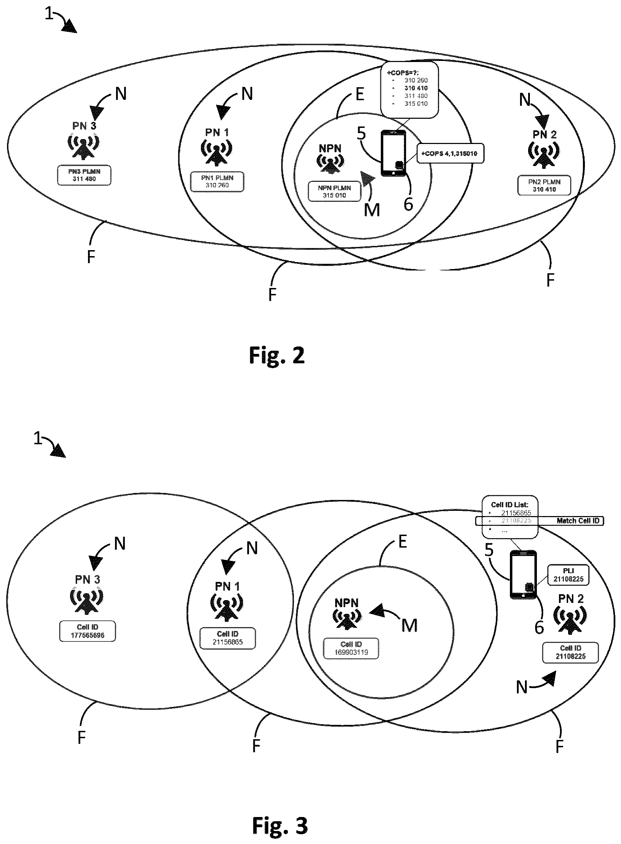

Fig. 2 shows a schematic exemplary illustration of several mobile communication networks M, N having overlapping network signals E, F and a user device 5 configured to access the mobile telecommunication networks M, N. The present example, a number of public networks (PN) are provided as a number of communication networks N with respective further network signals F. A non-public network (NPN), i.e., private network, is provided as a mobile telecommunication network M, were private has priority over public. As a result, when the NPN is available the user device 5 is supposed to switch to the NPN network, in particular allowing for switching smoothly specially when NPN and PN are overlapped and present at the same time as illustrated in the present example by the network signal E overlapping with the further network signals F. The mobile telecommunication networks M, N, and can be queried using +COPS=?, if NPN PLMN is shown it means NPN is available and an attempt can be made to attach to it. In order to detect when NPN is available a RUN AT COMMAND may be used to send AT COMMAND PLMN Selection +COPS as described above. This command is defined in ETSI 127.007 to attempt to register to a network or to query operators present in the networks M, N:
+COPS? Retrieve current mode, current selected MNO and the current access technology.
+COPS=? Retrieve PLMN list of operators present in the network.
+COPS=<mode>,<format>, <oper>, <AcT> Attempts to register to operator PLMN provided in <oper>.

Fig. 3 shows a further schematic exemplary illustration of several mobile communication networks M, N having overlapping network signals E, F and a user device 5 configured to access the mobile telecommunication networks can involve the detection of respective cell IDs. Such a configuration allows the application program dataset A to try to minimize the frequency of the network scanning (i.e., the number of executions of RUN AT COMMAND +COPS), while the communication interface 9 is connected to the PN by anticipating the NPN presence likelihood. Such a minimization can be particularly helpful, if the user device 5 underlies certain power supply constraints, such as limited battery capacity, or alike.

In the present example, this can be achieved by identifying what PN cell towers are in close proximity to NPN facilities. A possible solution could be using Location information to query the communication interface 9, for example, a modem of the user device 5, about some information related to the current registered network. The information can be used to determine if NPN is located near to the modem to perform a profile switching. Following commands defined in ETSI 102.223 are available for this purpose:
- Provide Local Information proactive command: The switching applet can requests the modem to send the current local information of the registered network:
   ∘ TERMINAL PROFILE Byte 4, Bit 6: Proactive UICC: PROVIDE LOCAL INFORMATION (MCC, MNC, LAC, Cell ID & IMEI) command
   ∘ Information received from this command: Mobile Country Code (MCC), Mobile Network Code (MNC), Location Area Code/Tracking Area Code (LAC/TAC) and Cell ID of the current serving cell (unique number to identify each Base Transceiver Station (BTS)).
- ENVELOPE (EVENT DOWNLOAD - Location status): With this event, the modem can inform the switching applet about any change occurred over the Location Status or Location Information of the registered network:
   ∘ TERMINAL PROFILE Byte 5, Bit 5: LOCATION STATUS EVENT.

According to the present example, the Cell ID may not be reported by the PROVIDE LOCATION INFORMATION command in case of a network rejection. The application program dataset A can store a list of the next connected Cell IDs from PN after receiving Limited service while in NPN or the last PN Cell IDs connected prior to connected to NPN. When these stored Cell IDs are the current Cell IDs connected, they can be used by switching applet as an indication that NPN is in close proximity and increase the network scanning interval frequency as the likelihood of finding NPN will increase. For instance, a respective network scanning interval algorithm can be set up such that upon detecting of a Cell ID in the closest Cell IDs list, the application program dataset A can increase the network scanning rate to improve the switching performance.

Alternatively, or additionally to using Cell IDs, further mechanisms can be included in the described method such as a usage of the GPS or network strength, or alike. For example, there are several AT+ commands defined to query the battery status of a device that can help to decide the network scanning frequency based on the battery status, such as: CBC (Battery Charge), +CBCAP (Battery Capacity), +CBCHG (Battery Charge status), +CBCON (Battery Connection Status). Furthermore, there is a SIMToolKit command to retrieve network measurements based on respective access technology that can be used to determine the network status when attached to a particular network access technology in a similar way as AT COMMAND AT+CSQ. An exemplary description thereof is provided in ETSI 102.223: Where the UICC has requested the Network Measurement Results for multiple access technologies, TERMINAL RESPONSE shall contain the Access Technology data object listing all current access technologies, followed by one NMR data object for each current access technology in the same sequence.

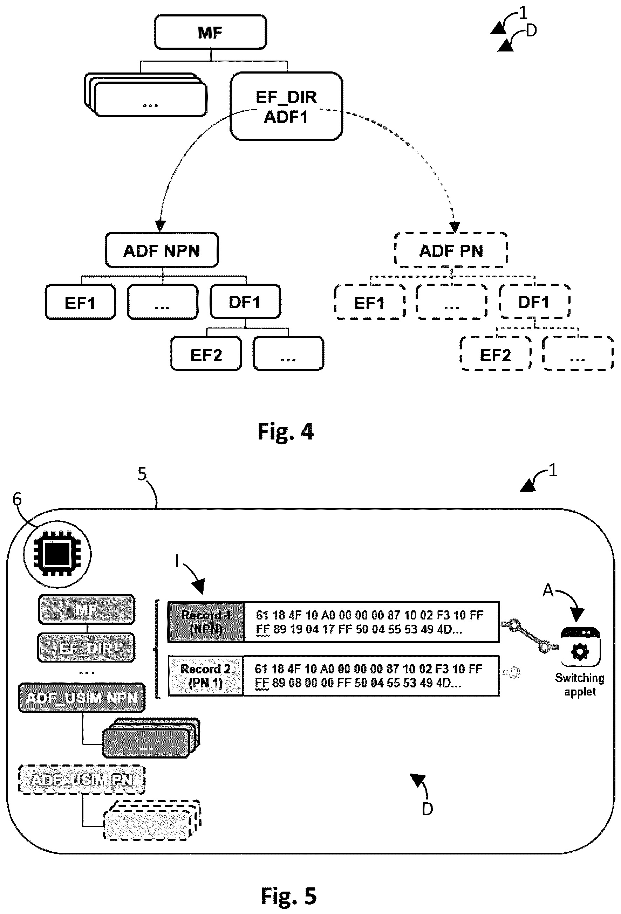

Fig. 4 shows a schematic exemplary illustration of a filesystem that can be used for managing data objects D involved in carrying out a corresponding method. According to the present example, the secure element 6, such as an UICC may have two USIM ADFs one with NPN (Ramen) and the other one with PN (POD). EF_DIR has only one record configured with the current user profile P, Q. In that manner, the communication interface 9, such as a modem, will read the ADF USIM file system of the activated subscription. In the present example, a filesystem configuration with two ADF USIMs but only one record present in EF_DIR file as illustrated. Alternatively, or additionally, profile switching mechanisms as described by the GSMA can be implemented (e.g., SGP.02, SGP.22, SGP.32, etc.).

Fig. 5 shows a schematic exemplary illustration of certain data objects, D such as profile identifiers I involved in carrying out a corresponding method. In order to switch between user profiles P, Q the application program dataset A needs to update the profile identifiers I, for example, in the form of an ICCID, possibly along with an EF_DIR record with the appropriate ADF USIM AID and may issue a REFRESH proactive command. The user device 5 can then toggle between subscriptions to the mobile telecommunication networks M, N as implemented by the respective user profiles P, Q. Alternatively, or additionally, other switching profiles solutions such as DUAL IMSI, GSMA SGP.22, ... can be used to trigger the profile changing. In the present example, the application program dataset A can be registered on EVENT_PROFILE_DOWNLOAD to retrieve the TERMINAL PROFILE from the modem to ensure RUN AT Command feature is supported (byte 8 bit 6 is set to '1').

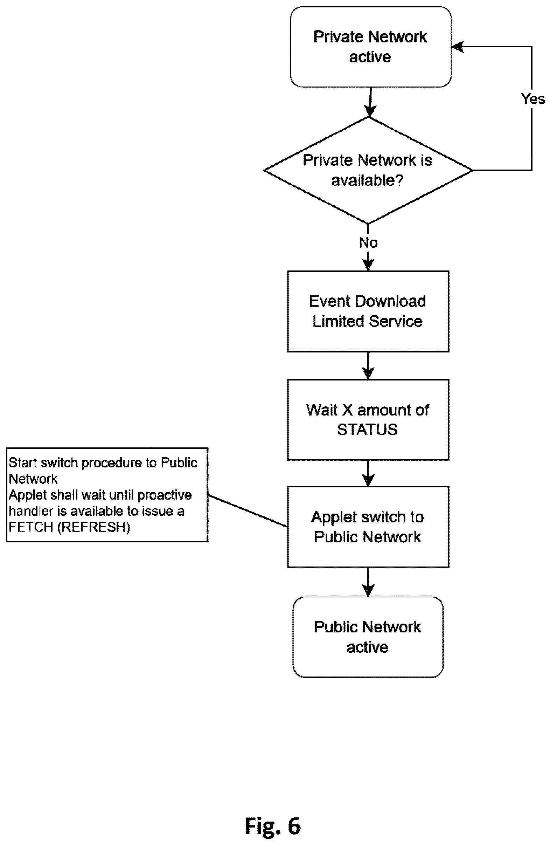

Fig. 6 shows a schematic exemplary illustration of steps that can be involved in transitioning from a user profile P to a further user profile Q when carrying out a corresponding method (e.g., transition from NPN profile to PN profile). Such an exemplary scenario may occur because the device leaves NPN range (e.g., NPN deployments are composed for a small infrastructure, typically limited in space to an office or campus, or alike). In this exemplary situation, a limited service event can be triggered by the device to the switching applet indicating that NPN is not available anymore but there are other networks present. On receiving this event the application program dataset A, such as an applet, might check if PN PLMN is present using RUN AT Command (+COPS) to ensure the PN is available and trigger the switching as described above. After updating the EF_DIR file with PN USIM ADF, the application program dataset A may trigger a REFRESH proactive command to request the communication interface 9 to retrieve the PN subscription data and perform PN attachment.

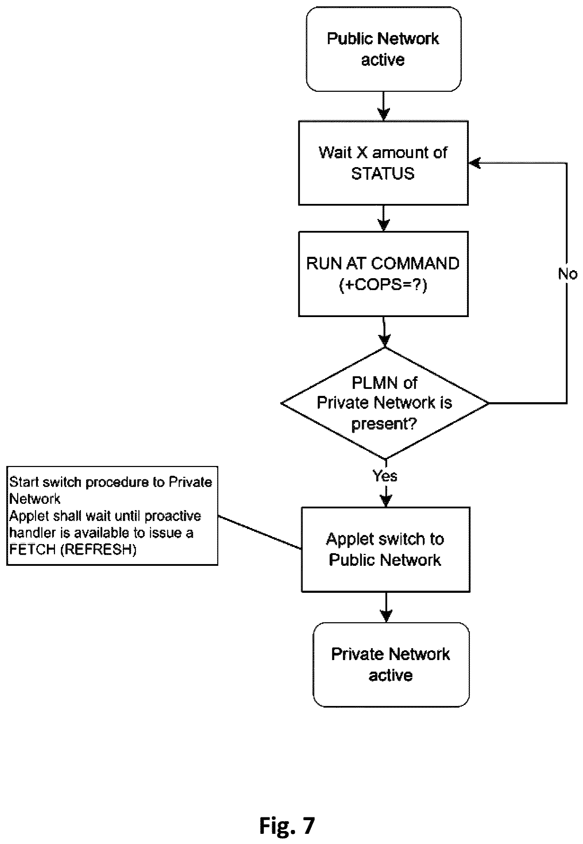

Fig. 7 shows a schematic exemplary illustration of steps that can be involved in transitioning from a further user profile Q to a user profile P when carrying out a corresponding method (e.g., transition from PN to NPN/PN). For the purposes of offering the present example, the NPN may have priority over the PN. Consequently, whenever NPN is available, the communication interface 9 should switch to NPN regardless of PN status. Such situation may be challenging situation in view of that the user device 5 may not tend to steer towards the NPN when the user device 5 already has a connectivity thereto. For example, when the communication interface 9 has switched to the PN because the NPN is not available, the application program dataset A can go into a POLL mode. Therefore, it may register to a EVENT_STATUS_COMMAND and after some STATUS events request the communication interface 9 to query the network to check if NPN PLMN is back again by using the RUN AT COMMAND (+COPS) as described above.

Special care may be required on the selection of the configuration of the number of STATUS between RUN AT COMMANDs for the following reasons:
1. A small number of STATUS commands may increase the frequency of the network scanning, offering the possibility of early detecting when the NPN is available, but it might drain limited power sources of the user device 5, such as its battery.
2. A big number of STATUS command may help to avoid power source issues, for example, in preserve battery time duration, but it will delay the detection of NPN presence.

For example, data shown below may be received as a response sample of RUN AT COMMAND +COPS? execution (actual information may be different depending on the modem):
AT Response: +COPS: (2,"Ramen","RMN","315010",7),(1,"Verizon","Verizon","311480",7),(1,"AT&T","AT&T","310410",12),(1,"AT&T","AT&T","310410",7),(1,"313 100","313100","313100",7),(1,"T-Mobile","T-Mobile","310260",7),(1,"T-Mobile","T-Mobile", "310260",12)
this exemplary data represents a list of network PLMNs that are visible to the communication interface 9, and the communication interface 9 reports back to the application program dataset A in response of +COPS=? command. The response provided within each PLMN pair may have the following format <stat>, long and short alphanumeric operator name, numeric format representation of the operator and access technology <Act>. It may also be considered that is also recommended in ETSI 127.007 to include <mode>, <format>. <Act> is only present if the user device 5 is capable to register to more than one access technology as shown in the following exemplary list:
- <stat>: network status with following values:
   ∘ 0: Unknown
   ∘ 1: Available
   ∘ 2: deregistered from network
   ∘ 3: forbidden
- Long alphanumeric format.
- Short alphanumeric format.
- Numeric format (PLMN).
- Act: access technology:
   ∘ 0: GSM
   ∘ 1: GSM Compact
   ∘ 2: UTRAN
   ∘ 3: GSM w/EGPRS
   ∘ 4: UTRAN w/HSDPA
   ∘ 5: UTRAN w/HSUPA
   ∘ 6: UTRAN w/HSDPA and HSUPA
   ∘ 7: E-UTRAN
   ∘ 8: EC-GSM-IoT (A/Gb mode)
   ∘ 9: E-UTRAN (NB-S1 mode)
   ∘ 10: E-UTRA connected to a 5GCN
   ∘ 11: NR connected to a 5GCCN
   ∘ 12: NR connected to an EPS core
   ∘ 13: NG-RAN
   ∘ 14: E-UTRA-NR dual connectivity
- Mode:
   ∘ 0: Automatic
   ∘ 1: Available
   ∘ 2: deregistered from network
   ∘ 3: forbidden

Such an exemplary list of operators of mobile telecommunication networks M, N may be presented in the following order: home network, networks referenced in SIM or active application in the secure element 6 (GSM or USIM) in the following exemplary order: HPLMN selector, User controlled PLMN selector, Operator controlled PLMN selector and PLMN selector (in the SIM or GSM application), and other network M, N. For example, when NPN PLMN is detected in the +COPS response from the user device 5, the application program dataset A may start the profile switching procedure as described above: NPN ADF AID may be configured in the EF_DIR and a REFRESH may be requested to the modem to start the NPN attachment attempt. Alternatively, or additionally, profile switching mechanisms as described by the GSMA can be implemented (e.g., SGP.02, SGP.22, SGP.32, etc.).

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: communication system
- 2: computing device
- 3: server device
- 4: hardware security module
- 5: user device
- 6: secure element
- 7: secure storage location
- 7a: first memory region
- 7b: second memory region
- 8: remote management application
- 9: communication interface / modem
- 10: configuration program
- 11: computer-readable data carrier
- 12: computer-readable medium
- 13: data carrier signal
- A: application program dataset
- B: terminal profile
- C: command message
- D: data object
- E: network signal
- F: further network signal
- G: signal strength
- H: security credentials
- I: profile identifier
- J: authentication certificate
- K: security key
- L: diversified data
- M: mobile telecommunication network
- N: further mobile telecommunication network
- O: operating system dataset
- P: user profile
- Q: further user profile
- R: network request
- S: step
- T: trusted entity
- U: user
- V: network response
- W: further network response
- X: terminal response
- Y: further terminal response
- Z: registration confirmation
- S0: initialisation
- S1: provide data
- S2: provide terminal profile
- S3: send command message
- S4: send network request
- S5: receive network response
- S6: provide terminal response
- S7: send another command message
- S8: send another signal request
- S9: receive signal strength
- S10: provide another terminal response
- S11: switch to and/or between networks
- S12: send additional command message
- S13: send additional network request
- S14: provide registration confirmation
- S15: provide additional terminal response

## Claims

1. Method of configuring a user device (5), in particular for communication via mobile telecommunication networks (N, M), the method comprising the steps of
providing at least one user profile dataset (P) for a user (U) to operate a secure element (6), such as an eUICC, of the user device (5), to access at least one mobile telecommunication network (M);
performing a network scan with the user device (5) to identify available mobile telecommunication networks (N, M); and
switching the secure element (6) to access at least one further mobile telecommunication network (N) identified by the network scan.

2. Method according to claim 1, wherein the at least one user profile dataset (P) includes security credentials (H) configured for accessing at least one mobile telecommunication network (M) and the at least one further mobile telecommunication network (N).

3. Method according to claim 1 or 2, wherein at least one user profile dataset (P) is provided for accessing the at least one mobile telecommunication network (M) and at least one further user profile dataset (Q) is provided for accessing the at least one further mobile telecommunication network (N).

4. Method according to at least one of claims 1 to 3, wherein the at least one user profile dataset (P) comprises respective diversified data (L) configured for accessing the at least one mobile telecommunication network (M) and the at least one further mobile communication network (M).

5. Method according to at least one of claims 1 to 4, further comprising the step of triggering the user device (5) with the secure element (6) to perform the network scan.

6. The method according to at least one of claims 1 to 5, further comprising the step of providing a list of available mobile telecommunication networks (M, N) to the secure element (6) by the user device (5).

7. Method according to claim at least one of claims 1 to 6, further comprising the step of automatically deciding to switch to the at least one further mobile telecommunication network (N).

8. Method according to at least one of claims 1 to 7, further comprising the step of implementing a time interval until deciding to switch to the at least one further mobile communication network (M)

9. Method according to at least one of claim 1 to 8, further comprising the step of triggering an assessment of available mobile telecommunication networks (M, N) based on cell identifiers of network terminals.

10. Method according to at least one of claim 1 to 9, further comprising the step of assessing a signal strength (R) of the at least one mobile telecommunication network (M) and/or the at least one further mobile telecommunication network (N).

11. Configuration program (10) for configuring a user device (5), in particular for communication via mobile telecommunication networks, wherein the configuration program (10) comprises instructions which, when the configuration program (10) is executed by a server device (3), a user device (5), and/or a secure element (6), cause the server device (3), the user device (5), and/or the secure element (6) to carry out a method of at least one of claims 1 to 10.

12. Application program dataset (A) for operating a secure element (6) of a user device (5), such as an eUICC, wherein the application program dataset (A) is configured to carry out a method according to at least one of claims 1 to 10 and/or configured with a configuration program (10) according to claim 11.

13. Computer-readable data carrier (11, 12, 13) having stored thereon a configuration program (10) according to claim 11 and/or an application program dataset (A) according to claim 12.

14. User device (5), in particular a mobile device or an IoT device to be configured for communication via mobile telecommunication networks by a user (U), wherein the user device 5) is configured to carry out a method according to at least one of claims 1 to 10, comprises a configuration program (10) according to claim 11, an application program dataset (a) according to claim 12 and/or a computer-readable data carrier (11, 12, 13) according to claim 13.

15. Server device (3), in particular a security server providing a secure location for handling user profiles (P) for communication via mobile telecommunication networks, wherein the server device (4) is configured to carry out a method according to at least one of claims 1 to 10, comprises a configuration program (10) according to claim 11, an application program dataset (A) according to claim 12 and/or a computer-readable data carrier (11, 12, 13) according to claim 13.
